# EUROPEAN PATENT APPLICATION

(11) **EP 1 503 053 A1**
(43) Date of publication of application: **02.02.2005**
(21) Application number: 04016443.6
(22) Date of filing: 13.07.2004
(51) Int. Cl.: F01N 3/08, B01D 53/94, F02D 41/02

(54) **Engine exhaust gas cleaning apparatus**

(30) Priority: 29.07.2003 JP 2003282100
(71) Applicant: Nissan Motor Co., Ltd., Yokohama-shi, Kanagawa 221-0023 (JP)
(72) Inventor: Miura, Manabu, Zushi-shi Kanagawa, 249-0003 (JP)
(74) Representative: Grünecker, Kinkeldey, Stockmair & Schwanhäusser Anwaltssozietät

(57) **Abstract**

When rich spike control is executed in a diesel engine (1) equipped with a NOx trapping catalytic converter (12), there are times when the amount of NOx desorbed is too little or too much. The rich spike control start timing is determined based on the NOx accumulation amount calculated during lean combustion operation and the rich spike control end timing is determined based on the NOx accumulation amount and the NOx desorption rate. Since the actual amount of NOx remaining in the NOx trapping catalytic converter (12) can be estimated based on the NOx desorption rate during rich spike control, the rich spike control can be ended when the amount of remaining NOx reaches a prescribed target value.

## Description

### BACKGROUND OF THE INVENTION

### Field of the Invention

The present invention generally relates to an engine exhaust gas cleaning apparatus for an engine. More specifically, the present invention relates to improvements to an engine exhaust gas cleaning apparatus for diesel engines having a NOx trapping catalytic converter provided in the exhaust system.

### Background Information

In internal combustion engines such as diesel engines, an exhaust gas recirculating system (EGR system) is widely used wherein a part of the exhaust gas is recirculated to lower the combustion temperature in order to reduce discharge of nitrogen oxide (NOx). The NOx trapping catalytic converter traps NOx in the exhaust gas when an air-fuel ratio in the exhaust gas is in a lean range and purifies (releases) the trapped NOx when the air-fuel ratio is in a rich range. The NOx deposited in the NOx trapping catalytic converter is typically purified when the amount of adsorbed and held NOx reaches a prescribed upper limit value.

In the NOx trapping catalytic converter, when a certain amount of NOx has accumulated, the excess air ratio λ of the exhaust gas is temporarily changed to a rich value to desorb and deoxidize the NOx from the absorbing agent. Thus, control that temporarily shifts the value of the excess air ratio λ to a rich value is called "rich spike control." Diesel engines are normally operated in a lean combustion state using an excess air ratio λ of approximately 2 to 3 which corresponds to a lean air fuel ratio. During rich spike control, the value of the excess air ratio λ is changed to approximately 0.8. Rich spike control is normally executed with non-regular timing in response to engine operating conditions to treat the NOx accumulated in the NOx trapping catalytic converter. In other words, rich spike control is not executed in response to a request that is issued by the driver.

A conventional rich spike control method is disclosed in Japanese Patent Publication No. 2600492. In this conventional rich spike control method, the amount of NOx accumulated in a NOx trapping catalytic converter during lean combustion operation is integrated in accordance with the engine operating conditions and when the result of the integral calculation of the NOx accumulation amount reaches a certain limit, a rich spike control is executed whereby the excess air ratio is lowered for a period of time corresponding to the NOx accumulation amount.

In view of the above, it will be apparent to those skilled in the art from this disclosure that there exists a need for an improved engine exhaust gas cleaning apparatus. This invention addresses this need in the art as well as other needs, which will become apparent to those skilled in the art from this disclosure.

### SUMMARY OF THE INVENTION

It has been discovered that in conventionally systems, the period of time over which rich spike control is executed is determined based on the result of the integral calculation of the NOx accumulation amount and the rich spike control is executed by lowering the excess air ratio λ for a fixed period of time irregardless of the actual NOx desorption rate. In other words, the rich spike control is executed without regard to the amount of NOx remaining in the NOx trapping catalytic converter and, consequently, there are times when the NOx is over treated or under treated.

One object of the present invention is to provide an engine exhaust gas cleaning apparatus that avoids these problems. In other words, the engine exhaust gas cleaning apparatus of the present invention was basically conceived for a diesel engine equipped with a rich spike control configured to lower the excess air ratio of the exhaust gas in order to desorb the NOx that is trapped in the NOx trapping catalytic converter.

In view of the forgoing, an engine exhaust gas cleaning apparatus is provided for an engine that basically comprises a NOx trapping catalytic converter, a NOx accumulation amount computing section, a NOx desorption rate determining section and a rich spike control section. The NOx trapping catalytic converter is disposed in an exhaust passage of an engine. The NOx accumulation amount computing section is configured to compute a NOx accumulated amount in the NOx trapping catalytic converter during a lean combustion state. The NOx desorption rate determining section is configured to determine a NOx desorption rate at which accumulated NOx desorbs from the NOx trapping catalytic converter during a rich combustion state. The rich spike control section is configured to perform a rich spike control to desorb the accumulated NOx in the NOx trapping catalytic converter by reducing the excess air ratio of the exhaust gas. The rich spike control section is further configured to determine a starting timing for starting the rich spike control based on the NOx accumulation amount that was computed, and to determine an ending timing for ending the rich spike control based on the NOx accumulation amount and the NOx desorption rate that were computed.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:

Figure 1 is a diagrammatic view of an exhaust gas cleaning apparatus or system for an internal combustion engine, e.g., a diesel engine, in accordance with one embodiment of the present invention;

Figure 2 is a first flowchart showing the control operations executed by the control unit of the exhaust gas cleaning apparatus or system in accordance with the present invention in order to determine when to regenerate the NOx trapping catalytic converter;

Figure 3 is a second flowchart showing the control operations of the rich spike control executed by the control unit of the engine fuel injection control apparatus or system in accordance with the present invention in order to regenerate the NOx trapping catalytic converter; and

Figure 4 is a stored map that is used to obtain the revision coefficient Reg_spd_hos is based on the excess air ratio λ.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

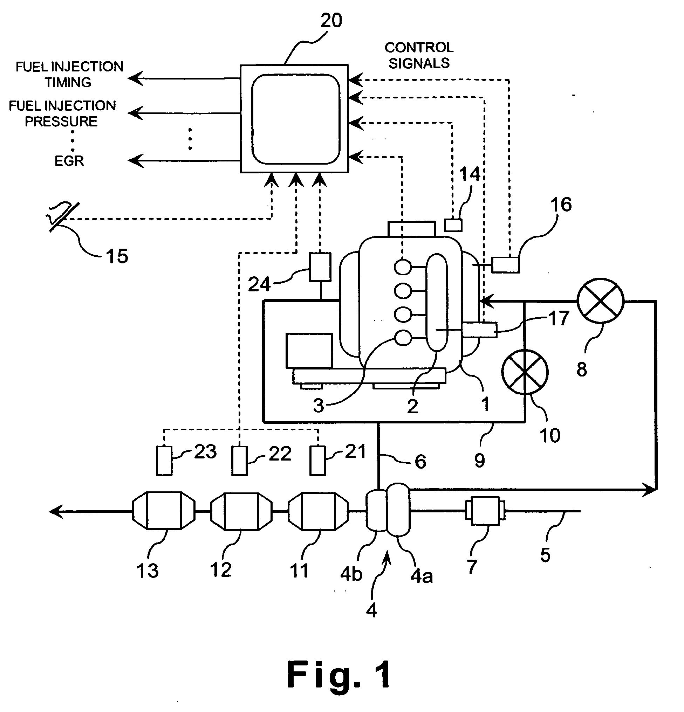

Referring initially to Figure 1, an exhaust gas cleaning apparatus or system is illustrated for an internal combustion engine such as a supercharged diesel engine 1 in accordance with a first embodiment of the present invention. The exhaust gas cleaning apparatus in accordance with the present invention can be applied to other internal combustion engines used in automobiles and the like.

As shown in to Figure 1, the engine 1 includes a common rail fuel injection system including a common rail 2, a plurality of fuel injection valves 3, and a high-pressure fuel pump (not shown) so as to be supplied with pressurized fuel. The fuel pump (not shown) pumps fuel to the common rail 2, where the pressurized fuel accumulates, and high-pressure fuel is delivered to the inside of the combustion chambers when the fuel injection valves 3 are opened. Thus, the fuel injection valves 3 inject fuel directly into respective combustion chambers (not shown) of each cylinder.

The fuel injection valves 3 are configured and arranged to execute a pilot injection before the main injection or executing a post-injection following the main injection. By changing the accumulation pressure of the common rail 2, the fuel injection pressure can be controlled in a variable manner.

A turbocharger (supercharger) 4 having a compressor 4a is arranged in an air intake passage 5 of the air intake system. The compressor 4a serves to pressurize the intake air. The compressor 4a is rotated by a turbine 4b that is driven by exhaust gas flowing through an exhaust passage 6. The supercharger 4 is positioned downstream of an air flow meter 7 in the air intake passage 5 of the engine 1. Preferably, the supercharger 4 is a variable-capacity type supercharger having a variable nozzle provided on the turbine 4b. By using a variable-capacity type supercharger 4, the variable nozzle can be constricted when the engine 1 is operating in a low speed region to increase the turbine efficiency. The variable nozzle of the supercharger 4 can be opened when the engine 1 is operating in a high speed region to increase the turbine capacity. Thus, this arrangement enables a high supercharging effect to be obtained over a wide range of operating conditions.

An intake air throttle valve 8 is installed inside the air intake passage 5 at a location downstream of the compressor 4a. The intake air throttle valve 8 serves to make it possible to control the quantity of intake air drawn into the engine 1. The intake air throttle valve 8 is, for example, an electronically controlled throttle valve whose opening degree can be varied freely using a stepper motor.

The exhaust passage 6 is provided with an exhaust gas recirculation (EGR) passage 9 that branches from a position between the engine 1 and the turbine 4b. The EGR passage 9 connects to the air intake passage 5 downstream of the intake air throttle valve 8.

The exhaust system is provided with an exhaust gas recirculation (EGR) control valve 10 that is installed in the EGR passage 9. The EGR valve 10 serves to control the exhaust gas recirculation quantity in accordance with the engine operating conditions. The EGR valve 10 is electronically controlled using a stepper motor such that the opening degree of the EGR valve 10 regulates the flow rate of the exhaust gas recirculated to the air intake system, i.e., the EGR quantity drawn into the engine 1. Preferably, the EGR valve 10 is feedback (closed-loop) controlled to regulate the EGR quantity in such a manner as to achieve an EGR ratio set in accordance with the operating conditions. For example, the EGR ratio can be feedback controlled by comparing a target intake air quantity to the actual intake air quantity that is measured and outputted by the air flow meter 7.

The exhaust system is also provided with an oxidation catalytic converter 11 having an HC adsorbing function, a NOx trapping catalytic converter 12 having a NOx trapping function, and an exhaust gas fine particle capturing filter (DPF = diesel particulate filter) 13 arranged in sequence in the exhaust passage 6 at a position downstream of the turbine 4b of the turbocharger 4.

The oxidation catalytic converter 11 has the characteristic of adsorbing exhaust HCs when the temperature is low and releasing the HCs when the temperature is high and it functions to oxidize HCs and CO when in an active state. The NOx trapping catalytic converter 12 adsorbs or traps NOx contained in the exhaust gas when the excess air ratio λ is greater than 1, i.e., when the air fuel mixture is lean, and releases the NOx when the excess air ratio λ is rich. The NOx trapping catalytic converter 12 also functions to deoxidize the NOx when in an active state. The particulate filter 13 captures fine particles (PM = particulate matter) contained in the exhaust gas and the captured PM is combusted by raising the exhaust gas temperature using regeneration control.

A control unit 20 is provided to control the exhaust gas cleaning apparatus of the present invention. In particular, the control unit 20 determines and sets the intake air quantity Qa, the fuel injection quantity Qf and the injection timing IT based on detection signals from various sensors (described below) that serve to detect the operating state of the engine 1 and executes the controls based on these signals. Thus, the control unit 20 also controls the drive of the fuel injection valve 3, controls the opening degree of the intake throttle valve 8 and the EGR valve 10 in response to detection signals from various sensors (described below).

The control unit 20 is a microcomputer comprising of a central processing unit (CPU) and other peripheral devices. The control unit 20 can also include other conventional components such as an input interface circuit, an output interface circuit, and storage devices such as a ROM (Read Only Memory) device and a RAM (Random Access Memory) device. The control unit 20 preferably includes an engine control program that controls various components as discussed below. The control unit 20 receives input signals from various sensors (described below) that serve to detect the operating state of the engine 1 and executes the aforementioned controls based on these signals. It will be apparent to those skilled in the art from this disclosure that the precise structure and algorithms for the control unit 20 can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

The intake air quantity Qa is detected by the air flow meter 7, which outputs a signal to the control unit 20 that is indicative of the intake air quantity Qa. The control unit 20 is also operatively coupled to a rotational speed sensor 14, an accelerator position sensor 15, an engine coolant temperature sensor 16, a rail pressure sensor 17, a plurality of exhaust system temperature sensors 21, 22 and 23, and an exhaust gas sensor or oxygen sensor 24. The rotational speed sensor 14 is configured and arranged to detect the engine rotational speed Ne of the engine 1, and output a signal to the control unit 20 that is indicative of the engine rotational speed Ne of the engine 1. The accelerator position sensor 15 is configured and arranged to detect the accelerator position APO, and output a signal to the control unit 20 that is indicative of the accelerator position APO.

The coolant temperature sensor 16 is configured and arranged to detect the temperature of the engine coolant Tw, and output a signal to the control unit 20 that is indicative of the temperature of the engine coolant Tw. The rail pressure sensor 17 is configured and arranged to detect the fuel pressure (fuel injection pressure) inside the common rail 2, and output a signal to the control unit 20 that is indicative of the fuel pressure (fuel injection pressure) inside the common rail 2. The temperature sensors 21, 22 and 23 are configured and arranged to detect the exhaust gas temperature in the general vicinity of the outlets of the oxidation catalytic converter 11, the NOx trapping catalytic converter 12, and the particulate filter 13, respectively. The temperature sensors 21, 22 and 23 are configured and arranged to output signals to the control unit 20 that are indicative of the exhaust gas temperature in the general vicinity of the outlets of the oxidation catalytic converter 11, the NOx trapping catalytic converter 12, and the particulate filter 13, respectively. The exhaust gas sensor 24 is configured and arranged in the exhaust passage 6 at a position upstream of the turbine 4b to detect the air fuel ratio or the oxygen concentration of the exhaust gas. The exhaust gas sensor 24 is configured and arranged to output a signal to the control unit 20 that is indicative of the air fuel ratio or the oxygen concentration of the exhaust gas.

Accordingly, the control unit 20 controls the regeneration of the NOx trapping catalytic converter 12 and the particulate filter 13. The control unit 20 sets the fuel injection quantity Qf and the fuel injection timing IT based on the detection signals from the various sensors and controls how the fuel injection valves 3 are driven. The control unit 20 also controls the opening degrees of the intake air throttle valve 8 and the EGR valve 10. The control unit 20 also controls the opening degrees of the intake air throttle valve 8 and the EGR valve 10 in accordance with various engine operating conditions. In other words, the control unit 20 controls the fuel injection valves 3 to adjust the fuel injection quantity Qf delivered by the fuel injection valves 3, controls the fuel injection valves 3 to adjust the injection timing IT of the fuel injection valves 3, and controls the intake air throttle valve 8 and the EGR valve 10 to adjust the intake air quantity Qa. The control unit 20 is also operated in accordance with various engine operating conditions (e.g., accelerator position).

In particular, as relates to the present invention, the control unit 20 executes rich spike control to regenerate i.e., desorb or release the NOx, the NOx trapping catalytic converter 12. As explained later, a rich spike control start timing is determined based on an NOx accumulation amount calculated during lean combustion operation and a rich spike control end timing is determined based on the NOx accumulation amount and a NOx desorption rate. The NOx desorption rate is the quantity of NOx that desorbs per unit time and it can be calculated based on using at least of the engine rotational speed, the fuel injection quantity and/or other engine operating conditions during rich spike control. Thus, since the actual amount of NOx remaining in the NOx trapping catalytic converter 12 can be estimated based on the NOx desorption rate during rich spike control, the rich spike control can be ended when the amount of remaining NOx reaches a prescribed target value. Therefore, situations where too much or too little NOx remains do not occur and the NOx trap filter can be used effectively at all times. Furthermore, since rich spike control can be conducted to the minimum degree necessary, the fuel efficiency and exhaust emissions can be improved. In relation to the present invention, the control unit 20 carries out the functions of the rich spike control section, the NOx accumulation amount computing section, and the NOx desorption rate determining section

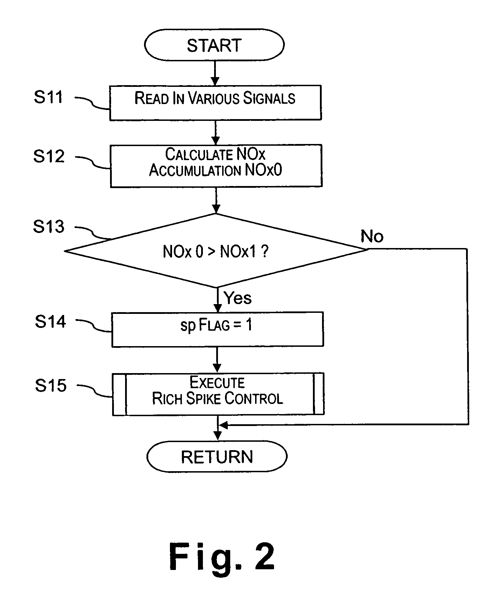

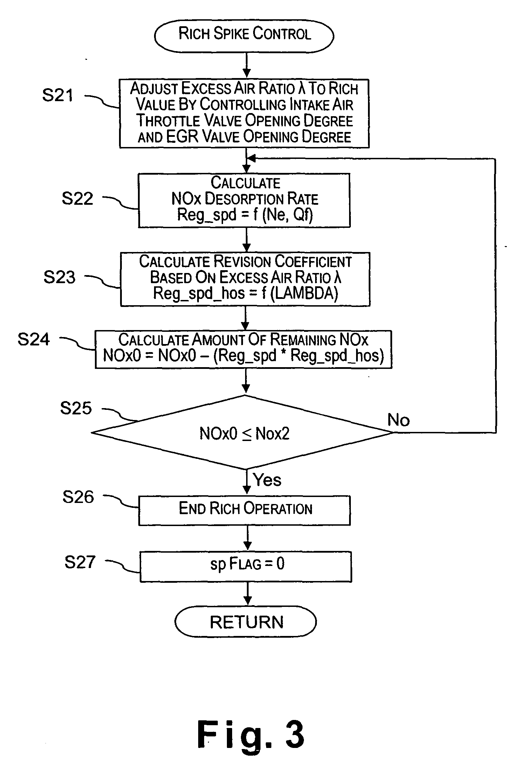

These control routines of Figures 2 and 3 are periodically executed in a cyclic manner at a prescribed fixed time interval when the engine 1 is operating in accordance with certain predetermined engine operating conditions, e.g., when the engine 1 is operating in a low-load, low-speed state, including idling. Now, the control routines of Figures 2 and 3 will be discussed for the executing the rich spike control by the control unit 20.

In step S11, the control unit 20 reads in various signals from each of the sensors shown in Figure 1 that represent engine operating conditions including, but not limited to, the engine rotational speed Ne, the accelerator position APO, the fuel injection quantity, and the engine coolant temperature. In other words, the engine operating state, e.g., load condition and rotational speed condition, of the engine 1 is determined by the control unit 20 receiving signals from each of the sensors shown in Figure 1.

In step S12, the control unit 20 calculates the amount of NOx accumulated (adsorbed) in the NOx trapping catalytic converter 12 using theses signals from the sensors of Figure 1. There are various known methods of calculating the NOx accumulation amount. For example, the NOx quantity can be estimated based on signals indicating such operating conditions as the engine rotational speed Ne, the fuel injection quantity Qf, and the coolant temperature Tw, and/or the NOx accumulation amount can be calculated by integrating the NOx quantity in accordance with the operation history.

In step S13, the control unit 20 compares the calculated NOx accumulation amount NOx0 to a reference value NOx1. If the NOx accumulation amount NOx0 is equal to or less than NOx1, then the control unit 20 ends the current cycle of the routine without performing the rich spike control. If the NOx accumulation amount NOx0 is greater than NOx1, then the control unit 20 proceeds to step S14 where it sets the sp flag to a value of 1 to indicate that rich spike control is in progress. Then, in step S15, the control unit 20 executes the rich spike control routine.

Figure 3 shows the rich spike control routine. In step S21, the control unit 20 executes control to reduce the opening degrees of the intake air throttle valve 8 and the EGR valve 10 in order to control the excess air ratio λ of the engine 1 to a rich value below the stoichiometric air fuel ratio. In some cases, to satisfy the need to achieve the target excess air ratio λ, a post injection is executed in order to add fuel during the period between late in the combustion stroke and the exhaust stroke. The NOx that accumulated in the NOx trapping catalytic converter 12 while the engine operated with lean combustion using a large excess air ratio λ is desorbed from the NOx absorbing agent due to the enriched excess air ratio λ value resulting from the rich spike control, and the desorbed NOx is cleaned by the deoxidizing treatment that occurs in the catalyst.

In S22 (the NOx desorption rate determining section), the control unit 20 calculates the NOx desorption rate Reg_spd. The NOx desorption rate Reg_spd is the amount of NOx that desorbs from the NOx trapping catalytic converter 12 per interval or per unit time. In this embodiment, the unit of time is one control cycle. The NOx desorption rate is basically determined by the engine operating conditions, i.e., in this embodiment, the fuel injection quantity Of and the engine speed Ne. Therefore, in this embodiment, the value of Reg_spd is found by searching a table or map of experimentally prepared data that matches Reg_spd values with respect to the fuel injection quantity Qf and the engine speed Ne.

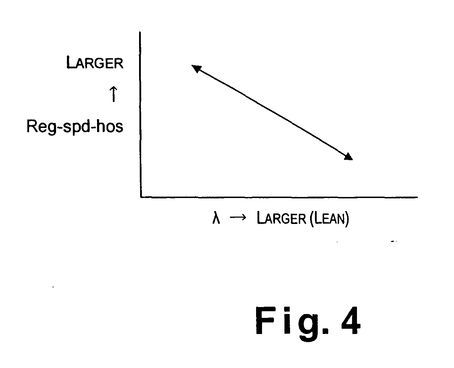

In step S23, in order to obtain a more precise NOx desorption rate, the control unit 20 finds a revision coefficient Reg_spd_hos based on the excess air ratio λ. The revision coefficient Reg_spd_hos is found by searching a pre -stored map that shown in Figure 4 based on the excess air ratio λ. The revision coefficient Reg_spd_hos is used to weight the NOx desorption rate Reg_spd and its characteristic is contrived such that the NOx desorption rate increases as the excess air ratio λ decreases. The value of the excess air ratio λ is detected directly with the air fuel ratio sensor 24 or computed based on the engine operating conditions. The revision coefficient Reg_spd_hos characteristic shown in the Figure 5, however, is merely a general characteristic and a more precise revision coefficient Reg_spd_hos characteristic depends on the engine characteristics and other factors. Thus, the revision coefficient Reg_spd_hos characteristic is shown as a linear function in Figure 5 for the sake of simplicity. The revision coefficient Reg_spd_hos characteristic is preferably a non-linear function. The revision coefficient Reg_spd_hos characteristic will be experimentally obtained on a case by case basis such that the regeneration control minimizes over treating or under treating of the accumulated NOx.

In step S24, the control unit 20 multiplies the calculated NOx desorption rate Reg_spd by the revision coefficient Reg_spd_hos and subtracts the result, i.e., the amount of NOx that has desorbed at that point in time, from the NOx accumulation amount NOx0 found in the routine shown in Figure 2 to obtain a new NOx accumulation amount (i.e., the amount of remaining NOx). The control unit 20 then updates the value of the NOx accumulation amount NOx0 by replacing it with a new NOx accumulation amount.

In step S25, the control unit 20 compares the NOx accumulation amount NOx0 obtained by subtracting the NOx desorption amount in the previous step to an end reference value NOx2. If NOx0 is larger than NOx2, the control unit returns to step S22 and repeats the decrement processing. The control unit 20 repeats the decrement processing until NOx0 is equal to or less than NOx2, at which time it proceeds to step S26 and ends rich spike control. After ending rich spike control, the control unit proceeds to step S27 and sets the sp flag to 0. Then the control unit 20 returns to the routine shown in Figure 2.

Although in the previously described rich spike control the NOx desorption rate Reg_spd is revised by being weighted with the revision coefficient Reg_spd_hos that is based on the excess air ratio λ, it is also possible to find the NOx desorption rate using other methods. For example, a more precise NOx desorption rate can be obtained by executing a revision based on such NOx trapping catalytic converter 12 related parameters as the bed temperature, the outlet exhaust gas temperature, the exhaust gas flow rate, and the quantity of deoxidizing agents (HC, CO, etc.) discharged. That is, since the NOx desorption rate follows characteristics whereby it increases as the bed temperature and the outlet exhaust gas temperature increase or as the exhaust gas flow rate and the deoxidizing agent discharge quantity increase, the revision can be executed based on these parameters. In other words, the step S22 (the NOx desorption rate determining section) of the control routine of Figure 3 can be substituted with an estimation step that estimates the NOx desorption rate based on either (1) an exhaust gas temperature in a general vicinity of an outlet of the NOx trapping catalytic converter during the rich spike control; (2) an exhaust gas flow rate during the rich spike control; or (3) an amount of reducing agent discharged during the rich spike control.

The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

This application claims priority to Japanese Patent Application No. 2003-282100. The entire disclosure of Japanese Patent Application No. 2003-282100 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents. Thus, the scope of the invention is not limited to the disclosed embodiments.

## Claims

1. An engine exhaust gas cleaning apparatus comprising:
a NOx trapping catalytic converter (12) disposed in an exhaust passage (6) of an engine (1);
a NOx accumulation amount computing section configured to compute a NOx accumulated amount in the NOx trapping catalytic converter (12) during a lean combustion state;
a NOx desorption rate determining section configured to determine a NOx desorption rate at which accumulated NOx desorbs from the NOx trapping catalytic converter (12) during a rich combustion state; and
a rich spike control section configured to perform a rich spike control to desorb the accumulated NOx in the NOx trapping catalytic converter (12) by reducing the excess air ratio of the exhaust gas,
the rich spike control section being further configured to determine a start timing for starting the rich spike control based on the NOx accumulation amount that was computed, and to determine an end timing for ending the rich spike control based on the NOx accumulation amount and the NOx desorption rate that were computed.

2. The engine exhaust gas cleaning apparatus as recited in claim 1, wherein
the NOx desorption rate determining section is configured to estimate the NOx desorption rate based on a fuel injection quantity and a rotational speed of the engine (1) during the rich spike control.

3. The engine exhaust gas cleaning apparatus as recited in claim 2, wherein
the NOx desorption rate determining section is configured to adjust the NOx desorption rate that was estimated based on the excess air ratio during the rich spike control.

4. The engine exhaust gas cleaning apparatus as recited in claim 3, wherein
the NOx desorption rate determining section is configured to adjust the NOx desorption rate by applying a weighted adjustment such that as the excess air ratio becomes smaller during the rich spike control, the NOx desorption rate becomes larger.

5. The engine exhaust gas cleaning apparatus as recited in claim 1, wherein
the NOx desorption rate determining section is configured to estimate the NOx desorption rate based on an exhaust gas temperature in a general vicinity of an outlet of the NOx trapping catalytic converter (12) during the rich spike control.

6. The engine exhaust gas cleaning apparatus as recited in claim 1, wherein
the NOx desorption rate determining section is configured to estimate the NOx desorption rate based on an exhaust gas flow rate during the rich spike control.

7. The engine exhaust gas cleaning apparatus as recited in claim 1, wherein
the NOx desorption rate determining section is configured to estimate the NOx desorption rate based on an amount of reducing agent discharged during the rich spike control.

8. The engine exhaust gas cleaning apparatus as recited in claim 1 or 2, wherein
the rich spike control section is configured to end the rich spike control when the result obtained by subtracting an amount of NOx that has desorbed according to the NOx desorption rate that was computed from the NOx accumulation amount that existed when the rich spike control was started reaches or falls below a reference value.
